Europäisches Patentamt

European Patent Office

Office européen des brevets

(19)

(11) Veröffentlichungsnummer: **0 160 181**
**B1**

## EUROPÄISCHE PATENTSCHRIFT

(12)

(45) Veröffentlichungstag der Patentschrift:
**17.02.88**

(51) Int. Cl.⁴: **A 47 J 41/02**

(21) Anmeldenummer: **85102528.8**

(22) Anmeldetag: **06.03.85**

(54) **Isoliergefäss, insbesondere Isollerflasche.**

(30) Priorität: **07.03.84 DE 8407009 U**

(43) Veröffentlichungstag der Anmeldung:
**06.11.85 Patentblatt 85/45**

(45) Bekanntmachung des Hinweises auf die Patenterteilung:
**17.02.88 Patentblatt 88/7**

(84) Benannte Vertragsstaaten:
**AT BE CH DE FR GB IT LI LU NL SE**

(56) Entgegenhaltungen:
DE - A - 1 816 448
DE - A - 3 312 915
DE - B - 2 447 072
DE - C - 260 862
DE - U - 7 336 476
DE - U - 7 729 773
US - A - 1 987 892

(73) Patentinhaber: **Rotpunkt Dr. Anso Zimmermann,
Industriestrasse, D-6434 Niederaula / Bad Hersfeld (DE)**

(72) Erfinder: **Zimmermann, Anso, Dr., Seilerweg 34,
D-6430 Bad Hersfeld (DE)**

(74) Vertreter: **Körber, Wolfhart, Dr. et al, Patentanwälte
Dipl.-Ing. H. Mitscherlich Dipl.-Ing. K. Gunschmann
Dr.rer.nat. W. Körber Dipl.Ing. J. Schmidt-Evers Dipl.-Ing.
W. Melzer Steinsdorfstrasse 10,
D-8000 München 22 (DE)**

ACTORUM AG

## Beschreibung

Gegenstand der Erfindung ist ein Isoliergefäss nach dem Oberbegriff des Anspruchs 1.

Ein Isoliergefäss dieser Bauart ist in DE-B-2 447 072 beschrieben und dargestellt. Bei der bekannten Ausführungsform ist das Gehäuseoberteil auf einem im Durchmesser verjüngten Abschnitt mit einem Aussengewinde versehen, auf den das ein Innengewinde aufweisende Gehäuseunterteil aufschraubbar ist. Dabei dient die Verschraubung nicht nur der Befestigung der Gehäuseteile aneinander, sondern sie dient auch dazu, den Vakuumglaseinsatz zwischen den Gehäuseteilen zu halten, wobei deutliche Längenunterschiede des Vakuumglaseinsatzes und auch Längenunterschiede der Gehäuseteile zu berücksichtigen sind. Die Anordnung ist deshalb so ausgelegt, dass bei einer mittleren Toleranz das Gehäuseunterteil nicht vollends auf das Aussengewinde des Gehäuseoberteils aufgeschraubt ist, sondern ein nicht abgedeckter Bereich des Aussengewindes verbleibt, der bei der Aufnahme eines kürzeren Vakuumeinsatzes zur Halterung desselben ausgenutzt werden kann.

Bei der bekannten Ausführungsform ist der Abdeckring im Durchmesser gleich gross bemessen wie das Gehäuseoberteil. Er ist bis zum Ende des Gewindes gegen die an dieser Stelle vorhandene Schulter geschraubt und so breit bemessen, dass er den nicht ausgenutzten Bereich des Aussengewindes und auch den oberen Rand des Gehäuseunterteils um einen gewissen Betrag überdeckt.

Die bekannte Ausführungsform ist zwar geeignet, den nicht ausgenutzten Bereich des Aussengewindes zu überdecken, jedoch ist sie verhältnismässig teuer, weil der Abdeckring als zusätzliches Bauteil herzustellen, zu lagern und zu montieren ist, wodurch die Herstellungskosten für das Isoliergefäss erhöht sind.

Der Erfindung liegt die Aufgabe zugrunde, das Isoliergefäss der vorliegenden Bauart bei Wahrung einer handhabungsfreundlichen und verschmutzungsunempfindlichen Bauweise dahingehend zu vereinfachen, dass das Isoliergefäss preiswerter herzustellen ist.

Diese Aufgabe wird durch das Kennzeichen des Anspruchs 1 gelöst.

Bei der erfindungsgemässen Ausgestaltung ist der Abdeckring durch eine einstückige Verlängerung des Randes des Gehäuseunterteils gebildet, so dass ein separates Bauteil, wie es bei dem Stand der Technik vorhanden ist, entfällt. Es ist lediglich das Gehäuseoberteil und das Gehäuseunterteil vorhanden, wobei im verschraubten Zustand der Rand des Gehäuseunterteils sich über das Aussengewinde bzw. über die am Ende des Aussengewindes angeordnete Schulter hinaus erstreckt und die Mantelfläche des Gehäuseoberteils etwa schliessend umfasst. Bei der erfindungsgemässen Ausgestaltung ist das vorliegende Problem, nämlich die Abdeckung des nicht ausgenutzten Bereiches des Aussengewindes unter Vermeidung eines zusätzlichen Bauteils gelöst. Das Übergreifen der Mantelfläche des Gehäuseoberteils führt zwar dazu, dass zumindest der Bereich des Randes des Gehäuseunterteils, der die Mantelfläche des Gehäuseoberteils überlappt, im Durchmesser grösser bemessen ist als der Mantel des Gehäuseoberteils. Dies ist jedoch in praktischer Hinsicht völlig unbedeutend, weil bei der erfindungsgemässen Ausgestaltung die Handhabung des Isoliergefässes nicht störend spürbar bzw. beeinträchtigt ist. Die etwa schliessende Umfassung des Gehäuseoberteils durch den Abdeckring und dessen konisch auslaufende Verjüngung führen zur angestrebten Schmutzunempfindlichkeit im Bereich des Abdeckringes. Auch das Aussehen des Isoliergefässes wird nicht beeinträchtigt, weil sich der Abdeckring als eine abgeschrägte Stufe in der Mantelfläche des Gehäuses darstellt. Im Gegenteil, die erfindungsgemässe Ausgestaltung kann als Vereinfachung des Aussehens des Isoliergefässes angesehen werden.

Hierzu tragen auch die Ausgestaltungen nach den Ansprüchen 2 bis 4 bei.

Bei der erfindungsgemässen Ausgestaltung ist auch gewährleistet, dass der Gehäuseoberteil als Kunststoffblasteil hergestellt werden kann, was bekanntlich nur dann möglich ist, wenn besondere Formgebungen wie hier das vorbeschriebene oder auch weitere Aussengewinde auf der Aussenseite des Kunststoffblasteils angeordnet sind. Die erfindungsgemässe Ausgestaltung ist jedoch auch dann vorteilhaft, wenn das Gehäuseoberteil durch ein Kunststoffspritzteil gebildet ist, was bei Isolierkannen üblich ist. Natürlich ist die erfindungsgemässe Ausgestaltung auch in gleicher Weise vorteilhaft, wenn das Gehäuseoberteil aus Metall besteht.

Nachfolgend wird ein Ausführungsbeispiel der Erfindung anhand einer vereinfachten Zeichnung beschrieben.

Es zeigen:

Fig. 1 eine erfindungsgemäss ausgestaltete Isolierflasche in der Seitenansicht;

Fig. 2 einen lotrechten Teilschnitt an der mit X gekennzeichneten Stelle in Fig. 1 in vergrösserter Darstellung.

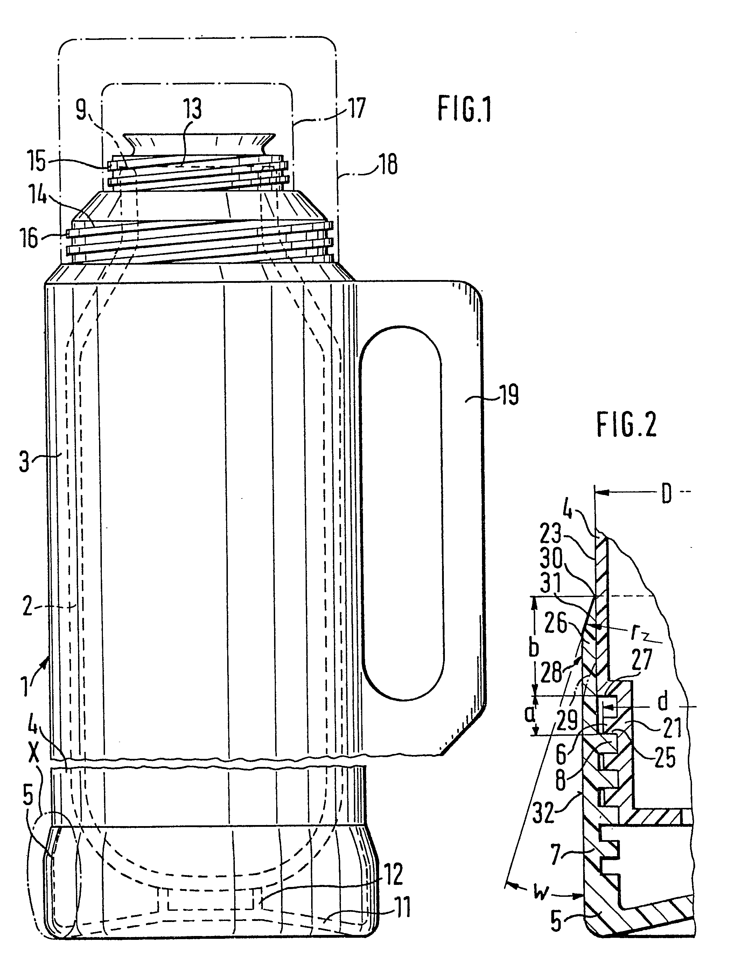

Die in Fig. 1 allgemein mit 1 bezeichnete Isolierflasche besteht in bekannter Weise aus einem Vakuumglaseinsatz 2, der von einem aus Kunststoff bestehenden Gehäuse 3 umgeben und dabei zwischen einem Gehäuseoberteil 4 und einem Gehäuseunterteil 5 gehalten ist, die miteinander verschraubt sind, wobei das Gehäuseoberteil ein Aussengewinde 6 und der Gehäuseunterteil an seinem hochgezogenen Rand 7 ein Innengewinde 8 aufweist (Fig. 2).

Die Halterung des Vakuumglaseinsatzes 2 erfolgt zwischen einer Schulter 9 im oberen Bereich des Gehäuseoberteils 4 und einem Boden 11 des Gehäuseunterteils 5, der eingezogen ist und ein zentrisches Druckstück 12 aufweist.

Die Isolierflasche 1 weist darüber hinaus in ihrem oberen Bereich einen sich axial erstreckenden zweistufigen Ansatz auf, dessen im Durchmesser unterschiedlich gross bemessene Abschnitte 13, 14 jeweils ein Aussengewinde 15, 16 tragen. Auf das Aussengewinde 15 ist ein nur andeutungsweise dargestellter Verschlussstopfen 17 aufgeschraubt; auf das Aussengewinde 16 ist eine ebenfalls andeutungsweise dargestellte Kappe 18 in Form eines Trinkbechers aufgeschraubt. Die Isolierflasche 1 weist auch einen Griff 19 auf, der einstückig an das Gehäuseoberteil 4 angeformt ist. Das Gehäuseoberteil 4 ist ein Kunststoffblasteil, das mit dem Griff 19 in einem Arbeitsgang geblasen wird. Beim Gehäuseunterteil 5 handelt es sich um ein Kunststoffpress- bzw. Kunststoffspritzteil.

In der Fig. 2 ist deutlich zu erkennen, dass das Aussengewinde 6 im Bereich der Gehäuseverbindung auf einem im Durchmesser verjüngten Abschnitt 21 des Gehäuseoberteils 4 angeordnet ist, wobei der Aussendurchmesser d des Aussengewindes 6 geringfügig kleiner bemessen ist als der Aussendurchmesser D des Mantels 23 des Gehäuseoberteils 4. Der Rand 7 des Gehäuseunterteils 5 ist über das Ende seines Innengewindes 8 hinaus verlängert (bei 25). Die mit 26 bezeichnete Randverlängerung erstreckt sich auch über die durch die Gehäuseoberteilverjüngung gebildete Schulter 27 hinaus und umfasst etwa schliessend den Mantel 23.

Die Randverlängerung 26 bildet somit einen allgemein mit 28 bezeichneten Abdeckring, der nicht nur den nicht benutzten Bereich a des Aussengewindes 6, sondern auch den Mantel 23 des Gehäuseoberteils 4 um ein Mass b abdeckt, welches so gross bemessen ist, dass beim Einsetzen eines im Toleranzbereich längeren Vakuumglaseinsatzes 2 eine wenn auch nur geringe Überdeckung des Mantels 23 durch den Abdeckring 28 gewährleistet ist. Beim Einsatz eines im Toleranzbereich kürzeren Vakuumglaseinsatzes 2 kann das Gehäuseunterteil 5 maximal um das Mass a weiter aufgeschraubt werden bis der Vakuumglaseinsatz 2 am Boden 11 zur Anlage kommt.

In der Fig. 2 ist bei 29 strichpunktiert die Position des Abdeckringes 28 angedeutet, die dieser dann einnimmt, wenn ein im Toleranzbereich längerer Vakuumglaseinsatz 2 eingesetzt wird.

Der Abdeckring 28 ist aussenseitig zu seiner freien Stirnseite 30 hin konisch verjüngt, wodurch die Stufung der Gehäuseaussenfläche verfeinert wird. In dieser Verfeinerung der Stufung kann eine Verbesserung des Aussehens der Isolierflasche 1 gesehen werden. Die Verjüngung 31 empfiehlt sich auch zur Vermeidung einer Stosskante, die bei der Handhabung der Isolierflasche 1 spürbar sein könnte. Die Verjüngung 31 wird durch eine kegelförmige Fläche gebildet, deren Radius r etwa 40 mm beträgt, und die unter Vermeidung einer Kante in die Mantelfläche 32 des Gehäuseunterteils 5 ausläuft. Der Keilwinkel w an der Spitze der Verjüngung 31 beträgt etwa 10°.

## Patentansprüche

1. Isoliergefäss, insbesondere Isolierflasche (1), mit einem Vakuumglaseinsatz (2) und einem diesen umgebenden hohlzylindrischen Gehäuse (3), das im wesentlichen besteht aus einem Gehäuseoberteil (4) und einem Gehäuseunterteil (5) in Form eines Bodens (11) mit hochgezogenem Rand (7) und wenigstens einem Stütznocken (12) zur Anlage und Halterung des Vakuumglaseinsatzes (2), wobei das Gehäuseoberteil (4) und der Rand (7) des Bodens (11) mit einem Gewinde (6, 8) versehen und bis zur Anlage des Stütznockens (12) an dem Vakuumglaseinsatz (2) miteinander verschraubt sind, wobei das Gehäuseoberteil (4) auf einem im Durchmesser verjüngten Abschnitt (21) ein Aussengewinde (6) aufweist und das Innengewinde (8) am Rand (7) des Bodens (11) ausgebildet ist, und wobei ein Abdeckring (28) vorgesehen ist, der einen nicht ausgenutzten Bereich des Aussengewindes (6) abdeckt, dadurch gekennzeichnet, dass der Abdeckring (28) durch eine einstückige Verlängerung (26) des Randes (7) des Bodens (11) gebildet ist, das Gehäuseoberteil (4) über das Aussengewinde (6) hinaus überlappt, innenseitig für einen etwa schliessenden Umgriff des Gehäuseoberteils (4) bemessen ist und aussenseitig zu seinem freien Ende hin konisch auslaufend verjüngt ist.

2. Isoliergefäss nach Anspruch 1, dadurch gekennzeichnet, dass die Verjüngung (31) kegelförmig geformt ist.

3. Isoliergefäss nach Anspruch 1, dadurch gekennzeichnet, dass die Verjüngung (31) durch eine kugelförmig gekrümmte Fläche gebildet ist.

4. Isoliergefäss nach Anspruch 2 oder 3, dadurch gekennzeichnet, dass der Keilwinkel (w) der Verjüngung (31) etwa 10° beträgt.

## Claims

1. An insulating container, in particular an insulating flask (1) with a vacuum glass insert (2) surrounded by a hollow cylindrical housing (3) which consists basically of an upper housing part (4) and a lower housing part (5) in the form of a base (11) with a raised up edge (7), and with at least one supporting means (12) for positioning and mounting the vacuum glass insert (2), wherein the housing upper part (4) and the edge (7) of the base (11) are provided with a screw thread (6, 8) and are screwed together until the supporting means (12) is positioned on the vacuum glass insert (2), wherein the upper housing part (4) has an outer screw thread (6) on a diametrically tapered section (21), and the inner screw thread (8) is formed on the edge (7) of the base (11), and wherein a cover ring (28) is provided which covers an unused area of the outer screw thread (6), characterised in that the cover ring (28) is formed by an integral extension of the edge (7) of the base (11), overlaps the upper housing part (4) beyond the outer screw thread (6), and has its interior dimensioned to quite closely embrace the upper housing part (4) and has its exterior conically tapered off towards its free end.

2. An insulating container according to claim 1, characterised in that the taper (31) is conically formed.

3. An insulating container according to claim 1, characterised in that the taper (31) is formed by a spherically curved surface.

4. An insulating container according to claim 2 or 3, characterised in that the lip angle (w) of the taper (31) amounts to about 10°.

## Revendications

1. Récipient isolant et en particulier bouteille isolante (1), comportant une ampoule en verre à vide intermédiaire (2) et un corps cylindrique creux (3), qui entoure cette dernière et se compose essentiellement d'une partie haute de corps (4) et d'une partie basse de corps (5), en forme de fond (11) à bord relevé (7), ainsi que d'au moins un taquet d'appui (12), pour l'appui et le maintien de l'ampoule à vide intermédiaire (2), la partie haute du corps (4) et le bord (7) du fond (11) étant munis d'un filetage (6, 8) et vissés entre eux jusqu'à la venue en appui du taquet d'appui (12) contre l'ampoule à vide intermédiaire (2), cependant que la partie haute du corps (4) présente, sur un segment à diamètre rétréci (21), un filetage extérieur (6) et que le filetage intérieur (8) est formé au bord (7) du fond (11), une bague de recouvrement (28) est formée par un prolongement (26 ) — d'une seule pièce — du bord (7) du fond (11); que la partie haute du corps (4) dépasse de filetage extérieur (6); qu'elle est dimensionnée intérieurement pour envelopper à peu près jointivement la partie haute de corps (4) et qu'extérieurement elle se termine, vers son extrémité libre, en un rétrécissement conique.

2. Récipient isolant suivant la revendication 1, caractérisé en ce que le rétrécissement (31) est conique.

3. Récipient isolant suivant la revendication 1, caractérisé en ce que le rétrécissement (31) est formé par une surface sphérique courbe.

4. Récipient isolant suivant la revendication 2 ou 3, caractérisé en ce que l'angle de cône (w) du rétrécissement (31) est d'environ 10°.

FIG.1

FIG.2